# FASCICULE DE BREVET EUROPEEN

(11) **EP 1 198 684 B1**
(45) Date de publication et mention de la délivrance du brevet: **12.05.2004**
(21) Numéro de dépôt: 00949610.0
(22) Date de dépôt: 03.07.2000
(51) Int. Cl.: F16L 57/00

(54) **EMBOUT DE PROTECTION POUR UNE EXTREMITE DE TUBE**
SCHUTZKAPPE FÜR EIN ROHRENDE
PROTECTIVE END CAP FOR TUBE END

(30) Priorité: 30.07.1999 FR 9909951
(43) Date de publication de la demande: 24.04.2002
(73) Titulaire: LEGRIS SA, 35000 Rennes (FR)
(72) Inventeur: BLIVET, Philippe, F-35000 Rennes (FR)
(74) Mandataire: Robert, Jean-Pierre
(86) Numéro de dépôt international: PCT/FR2000/001883
(87) Numéro de publication internationale: WO 2001/009546

(56) Documents cités:
- GB-A- 2 028 949
- GB-A- 2 031 858
- GB-A- 2 321 041

## Description

Embout de protection pour une extrémité de tube.

La présente invention concerne un embout de protection pour une extrémité de tube.

On connaît des embouts de protection pour extrémité de tube se présentant sous la forme d'un fourreau ayant un axe et possédant un logement central de réception de l'extrémité de tube, avec une extrémité ouverte et une extrémité fermée, le document GB-A-2 028 919 montre un tel embout de protection.

De tels embouts sont couramment montés sur des extrémités de tube pour en assurer la protection pendant leur stockage, leur transport et leur manipulation et avant leur raccordement à un équipement tel qu'un corps de composant pneumatique ou hydraulique.

Selon l'invention, on propose un embout de protection pour une extrémité de tube comportant un fourreau ayant un axe et possédant un logement central de réception de l'extrémité de tube, avec une extrémité ouverte et une extrémité fermée, embout dans lequel le fourreau est pourvu à son extrémité ouverte d'une bague détachable de ce fourreau pour former sur l'extrémité de tube, après retrait du fourreau et raccordement de l'extrémité de tube à un équipement, un bouchon d'obturation de l'espace interstitiel subsistant entre l'extrémité de tube et l'équipement.

Ainsi, avant le raccordement de l'extrémité de tube à l'équipement, l'embout exerce sa fonction classique de protection de l'extrémité de tube. Lorsque le raccordement de l'extrémité de tube à l'équipement concerné doit être effectué, la bague est détachée du fourreau pour rester sur l'extrémité de tube, tandis que le fourreau est retiré pour dégager l'extrémité de tube et permettre son raccordement à l'équipement. Ce raccordement étant effectué, la bague qui est toujours en place sur l'extrémité de tube est plaquée contre l'équipement pour empêcher que des impuretés ne s'y introduisent par l'espace interstitiel subsistant entre cet équipement et l'extrémité de tube. Dans cet état, la bague exerce une fonction d'obturateur ou de "cache-poussière" pour le raccord de l'extrémité de tube à l'équipement.

Dans un mode de réalisation avantageux, la bague détachable est réalisée en une seule pièce venue de matière avec le fourreau, une zone sécable de faibles caractéristiques mécaniques étant ménagée à la jointure entre la bague et le fourreau pour permettre un détachement manuel de ladite bague.

Selon une caractéristique avantageuse de l'invention la bague détachable présente un épaulement intérieur agencé pour coopérer avec un épaulement correspondant de l'extrémité de tube pour retenir la bague détachable sur l'extrémité de tube lorsqu'un effort de retrait axial est exercé sur le fourreau. La bague est ainsi retenue d'elle-même sur l'extrémité de tube et se détache automatiquement du fourreau lorsqu'un effort de retrait axial d'une intensité suffisante est exercé sur celui-ci.

Avantageusement alors, la bague détachable présente un diamètre intérieur qui est légèrement inférieur à celui du fourreau, l'épaulement de retenue de la bague détachable étant ménagé à la jointure entre cette bague et le fourreau .

Selon une autre caractéristique avantageuse de l'invention, la bague détachable comporte un corps adjacent au fourreau et destiné à se loger entre l'extrémité de tube et l'équipement et un épaulement destiné à se plaquer contre l'équipement. On obtient ainsi une obturation particulièrement efficace et commode. Il suffit en effet de dimensionner le corps de la bague de telle manière qu'il soit inséré avec un certain serrage entre l'équipement et l'extrémité de tube. Le serrage obtenu maintien alors sans autre organes de verrouillage la bague dans sa position de bouchon contre l'équipement et renforce de plus l'efficacité de l'obturation.

Avantageusement alors, le corps de la bague détachable présente une surface extérieure tronconique. La conicité du corps de la bague permet de faciliter l'insertion de ce corps dans l'équipement tout en obtenant un bon serrage.

D'autres caractéristiques et avantages de l'invention apparaîtront à la lecture de la description qui suit d'un mode de réalisation particulier donné à titre d'exemple non limitatif.

Il sera fait référence aux dessins en annexe parmi lesquels :
- la figure 1 est une vue de profil d'un embout de protection conforme à l'invention ;
- la figure 2 est une vue en coupe axiale de l'embout de la figure 1, prêt à être emmanché sur une extrémité de tube ;
- la figure 3 est une vue analogue à la figure 2, l'embout ayant été emmanché sur l'extrémité de tube pour en assurer la protection ;
- la figure 4 est une vue analogue à la figure 3, un effort axial étant exercé sur le fourreau et l'épaulement intérieur de la bague détachable venant en butée contre l'épaulement correspondant de l'extrémité de tube ;
- la figure 5 est une vue analogue à la figure 4, la bague étant détachée du fourreau après rupture de sa liaison avec celui sous l'effet de l'effort de retrait axial ;
- la figure 6 est une vue analogue à la figure 5, le fourreau étant retiré de l'extrémité de tube sur laquelle seule demeure la bague détachée ;
- la figure 7 est une vue de profil de l'extrémité de tube raccordé à un équipement, la bague détachée de l'embout exerçant sa fonction d'obturateur ou de "cache-poussière" entre l'extrémité de tube et l'équipement.

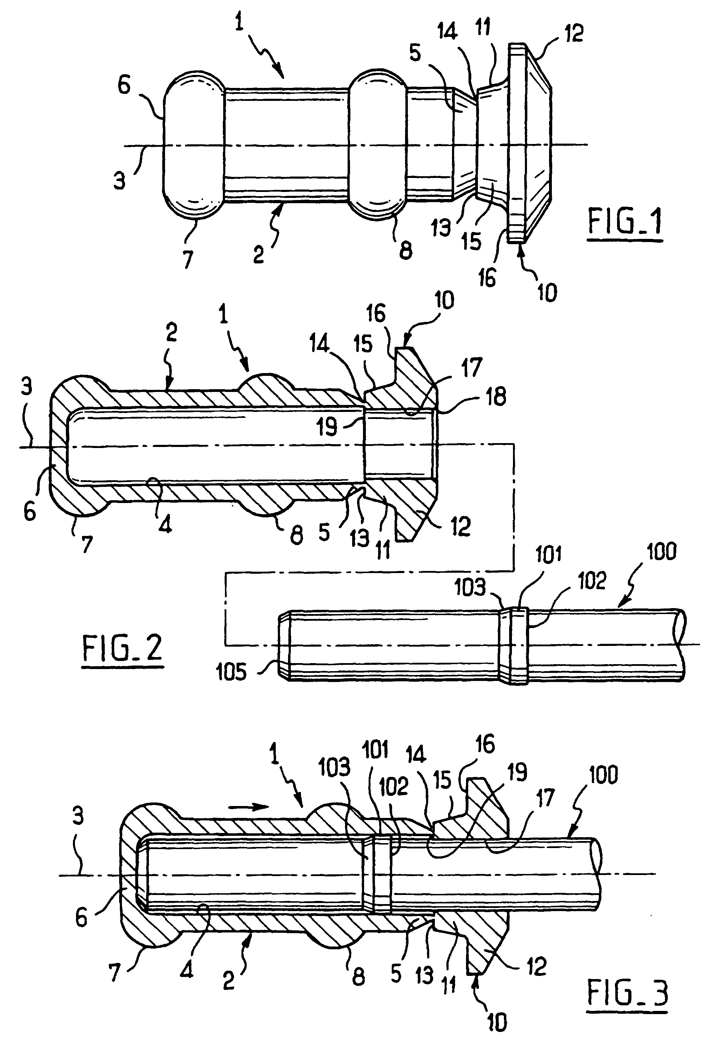

En référence aux figures, et en particulier aux figures 1 et 2, un embout 1 conforme à l'invention est utilisé pour la protection d'une extrémité de tube 100.

Cet embout comporte un fourreau 2 ayant un axe 3 et possédant un logement central cylindrique 4, avec une extrémité ouverte 5 située à droite dans la représentation des figures et une extrémité fermée 6 située à gauche. Extérieurement, le fourreau 2 présente de plus deux reliefs annulaires 7,8 destinés à faciliter sa préhension manuelle en vue de sa traction suivant l'axe 3, comme cela sera expliqué ultérieurement.

A son extrémité ouverte 5, le fourreau 2 est pourvu d'une bague 10 qui en est détachable. En l'espèce, cette bague 10 comporte un corps 11 présentant une surface extérieure périphérique de forme tronconique de sommet tourné en direction du fourreau, et un épaulement 12 situé à droite du corps 11, c'est-à-dire à distance du fourreau 2, et présentant une face d'appui 16 perpendiculaire à l'axe 3 et faisant face au fourreau 2. Le corps 11 de la bague 10 possède en outre un bord gauche 13 qui est solidaire de l'extrémité avant 5 du fourreau 2.

En l'espèce, la bague détachable 10 est réalisée en une seule pièce venue de matière avec le fourreau 2. Une zone sécable 14 est ménagée au moyen d'une entaille périphérique à la jointure entre le bord gauche 13 de la bague 10 et l'extrémité avant 5 du fourreau 2. Cette zone sécable 14 présente, du fait de sa faible épaisseur, de faibles caractéristiques mécaniques ce qui permet un détachement manuel de la bague par rapport au fourreau 2 par rupture de cette zone sous l'effet d'un effort axial de traction exercé sur le fourreau 2, comme cela sera expliqué ultérieurement.

La bague 10 présente enfin une surface intérieure cylindrique d'axe 3 dont le diamètre est légèrement inférieur à celui du logement central 4 du fourreau 2 et sensiblement égal au diamètre extérieur du tube 100. A son extrémité droite, cette surface intérieure 17 de la bague 10 présente un chanfrein 18.

Le rétrécissement de diamètre entre le logement cylindrique 4 du fourreau 2 et la surface intérieure cylindrique 17 de la bague 10 crée un épaulement 19 dont la surface qui fait face au fourreau 2 est en l'espèce située dans le même plan perpendiculaire à l'axe 3 que le bord gauche 13 du corps 11 de la bague 10.

L'embout est livré dans la configuration illustrée par les figures 1 et 2 conforme à la description qui vient d'être donnée, s'utilise de la manière suivante.

La première fonction de cet embout est de protéger l'extrémité de tube 100. Comme cela a été mentionné précédemment, le tube 100 présente un diamètre extérieur qui est sensiblement égal au diamètre de la surface intérieure 17 de la bague 10. Ce tube 100 possède en outre un épaulement 101 situé à une certaine distance de son extrémité libre 105 et ménageant, par référence aux figures, une surface de gauche 103 formant une rampe conique et une surface de droite 102 située dans un plan sensiblement perpendiculaire à l'axe du tube 100.

Comme cela est illustré par la figure 3, l'embout 1 est emmanché sur l'extrémité de tube 100, son axe étant alors confondu avec l'axe 3 de l'embout. L'extrémité de tube 100 est ainsi enfoncée dans le logement 4 du fourreau 2 jusqu'à ce que son extrémité libre 105 parvienne en butée contre l'extrémité fermée 6 de ce fourreau. Avant de parvenir à cette configuration d'emmanchement complet de l'embout 1 sur l'extrémité de tube 100, représentée à la figure 3, l'épaulement 101 a franchi la bague 10 de sorte que la face 102 de l'épaulement 101 se situe à gauche de l'épaulement intérieur 19 situé à la jointure entre la bague 10 et le fourreau 2. La forme conique de la face de gauche 103 de l'épaulement 101 du tube 100 facilite à cet égard le passage de l'épaulement 101 au travers de la bague 10 malgré le fait que le diamètre de l'épaulement 101 soit légèrement supérieur à celui de la surface intérieure 17 de cette bague.

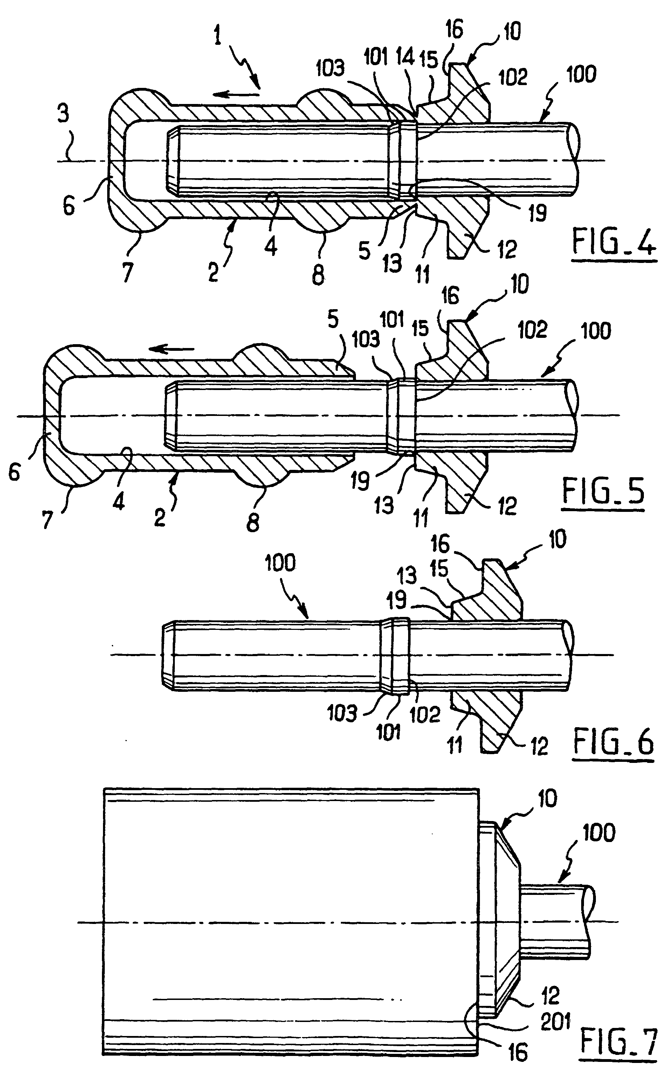

Dans cette configuration, l'embout 1 exerce sa fonction classique de protection, de l'extrémité de tube 100. On notera que, dans le cas ou l'embout 1 a tendance à glisser sur l'extrémité de tube 100 vers la gauche, c'est-à-dire pour s'en échapper, comme illustré par la figure 4, l'épaulement intérieur 19 ménagé à la jointure entre la bague 10 et le fourreau 2 vient en butée contre la face de gauche 102 de l'épaulement 101 de l'extrémité de tube 100, de sorte que l'embout 1 est retenu sur le tube 100. On évite ainsi que l'extrémité de tube 100 ne soit malencontreusement dépossédée de sa protection par l'embout 1, par exemple lors d'une manipulation ou d'un transport.

Lorsque le raccordement de l'extrémité de tube 100 à un équipement 200 (visible seulement à la figure 7) doit être effectué, l'extrémité de tube 100 est préalablement libérée de son recouvrement par le fourreau 2. A cet effet, comme cela est illustré par les figures 4 et 5, un effort de traction suivant l'axe 3 et en direction de la gauche est exercé sur le fourreau 2. Cet effort de traction visant au retrait axial du fourreau 2 est exercé manuellement, la prise du fourreau 2 par le manipulateur étant facilitée et fiabilisée par la présence des deux reliefs annulaires 7,8 sur la surface extérieure du fourreau 2. La bague 10 est quant à elle retenue par la butée de l'épaulement intérieure 19 contre la face de droite 102 de l'épaulement 101 de l'extrémité de tube 100. Lorsque l'intensité de l'effort de retrait est suffisante, la zone sécable 14 ménagée à la jointure entre la bague 10 et le fourreau 2 se rompt, si bien que la bague 10 se détache du fourreau.

Le fourreau 2 peut alors être retiré de l'extrémité de tube 100 pour laisser celle-ci dégagée, comme illustré par la figure 6. On comprend toutefois que, dans cette configuration, la bague 10, détachée du fourreau 2, est toujours en place sur l'extrémité du tube 100, comme cela est d'ailleurs visible à la figure 6.

L'extrémité du tube 100 peut alors être raccordée à un équipement tel que celui schématiquement représenté en 200 à la figure 7 par un dispositif de raccordement classique qui ne fait pas l'objet de la présente invention et qui ne sera donc pas décrit.

Ce raccordement étant effectué, la bague 10, qui est toujours en place sur l'extrémité de tube 100, est plaquée contre l'équipement 200 pour former un obturateur ou "cache-poussière" empêchant que des impuretés ne s'introduisent dans l'espace interstitiel subsistant entre l'équipement 200 et l'extrémité de tube 100. Plus précisément, le corps 11 de la bague 10 s'emboîte à la façon d'un bouchon dans l'espace interstitiel subsistant entre l'équipement 200 et l'extrémité de tube 100 et est serré à l'intérieur de cet espace, l'insertion et le serrage à l'intérieur de l'équipement 200 étant facilité et fiabilisé par la conicité de la surface périphérique 15 du corps 11 de la bague 10. L'obturation et la protection de l'espace interstitiel subsistant entre l'équipement 200 et l'extrémité de tube 100 sont complétées par l'épaulement de la bague 10 qui se plaque à la façon d'une rondelle ou d'un chapeau contre l'équipement 200, la face 16 de cet épaulement venant en butée contre une face correspondante 201 de l'équipement 200.

L'invention n'est pas limitée au mode de réalisation qui vient d'être décrit, mais englobe au contraire toute variante reprenant, avec des moyens équivalents, ses caractéristiques essentielles.

En particulier, bien que dans l'exemple précédemment décrit la bague détachable soit réalisée en une seule pièce avec le fourreau, il serait également possible de réaliser un embout conforme à l'invention dans lequel la bague détachable serait réalisée en une pièce séparée, dès l'origine, du fourreau. Dans ce cas, des moyens de fixation temporaires sécables seront prévus afin de maintenir temporairement la bague 10 solidaire du fourreau 1, jusqu'à ce qu'un effort axial visant à séparer la bague du fourreau ne fasse céder les moyens de fixation pour permettre le détachement de la bague par rapport au fourreau. On pourra par exemple prévoir un montage à emboîtement serré et/ou avec encoche, un collage, ou tout autre moyens de fixation présentant une zone sécable à faibles caractéristiques mécaniques.

D'autre part, bien que dans l'exemple illustré précédemment la bague détachable soit pourvue d'un épaulement intérieur situé dans le même plan que son bord gauche (par référence aux dessins), il sera également possible de prévoir que la bague détachable soit pourvue d'un épaulement intérieur situé plus en retrait, c'est-à-dire d'avantage vers la droite (en référence aux figures) par rapport à son bord gauche, l'essentiel étant que cet épaulement puisse coopérer avec une face correspondante d'un épaulement d'extrémité de tube.

Cet épaulement intérieur, s'il est avantageux dans la mesure où il permet un blocage automatique de la bague détachable sur l'extrémité de tube, n'est cependant pas indispensable. On pourra réaliser un embout conforme à l'invention comportant une bague détachable ne présentant aucun épaulement d'intérieur susceptible de la retenir sur l'extrémité de tube. On pourra par exemple prévoir que la surface intérieure de la bague (référencée 17 aux figures) s'étend dans la continuité de la surface du logement central du fourreau (référencé en 4 aux figures). Il suffira alors pour détacher la bague du fourreau d'exercer sur la bague d'une part et sur le fourreau d'autre part des efforts axiaux antagonistes, voire des efforts de torsion, visant à les séparer. On pourra à cet effet se servir de la prise qu'offre l'épaulement 12 de la bague.

## Revendications

1. Embout de protection pour une extrémité de tube (100) comportant un fourreau (2) ayant un axe (3) et possédant un logement central (4) de réception de l'extrémité de tube (100), avec une extrémité ouverte (5) et une extrémité fermée (6), **caractérisé en ce que** le fourreau est pourvu à son extrémité ouverte (5) d'une bague (10) détachable de ce fourreau pour former sur l'extrémité de tube (100), après retrait du fourreau (2) et raccordement de l'extrémité de tube (100) à un équipement (200), un bouchon d'obturation de l'espace interstitiel subsistant entre l'extrémité de tube (100) et l'équipement (200).

2. Embout de protection selon la revendication 1, **caractérisé en ce que** la bague détachable (10) est réalisée en une seule pièce venue de matière avec le fourreau (2), une zone sécable (14) de faibles caractéristiques mécaniques étant ménagée à la jointure entre la bague (10) et le fourreau (2) pour permettre un détachement manuel de ladite bague.

3. Embout de protection selon l'une des revendications précédentes, **caractérisé en ce que** la bague détachable (10) présente un épaulement intérieur (19) agencé pour coopérer avec un épaulement correspondant (102) de l'extrémité de tube (100) pour retenir la bague détachable (10) sur l'extrémité de tube (100) lorsqu'un effort de retrait axial est exercé sur le fourreau (2).

4. Embout de protection selon la revendication 3, **caractérisé en ce que** la bague détachable (10) présente un diamètre intérieur qui est légèrement inférieur à celui du fourreau (2), l'épaulement (19) de retenue de la bague détachable (10) étant ménagé à la jointure entre cette bague et le fourreau (2).

5. Embout de protection selon l'une des revendications précédentes, **caractérisé en ce que** la bague détachable (10) comporte un corps (11) adjacent au fourreau (1) et destiné à se loger entre l'extrémité de tube (100) et l'équipement (200) et un épaulement (12) destiné à se plaquer contre l'équipement (200).

6. Embout de protection selon la revendication 5, **caractérisé en ce que** le corps (11) de la bague détachable (10) présente une surface extérieure tronconique.

## Claims

1. A protective endpiece for the end of a tube (100), the endpiece comprising a sheath (2) about an axis (3) possessing a central housing (4) for receiving the end of the tube (100) and having an open end (5) and a closed end (6), the endpiece being **characterized in that** the sheath is provided at its open end (5) with a ring (10) that is detachable from the sheath so that after the sheath (2) has been removed and the end of the tube (100) has been coupled to a piece of equipment (200), the ring forms a stopper on the end of the tube (100) for closing the gap that exists between the end of the tube (100) and the equipment (200).

2. A protecting endpiece according to claim 1, **characterized in that** the detachable ring (10) is made integrally with the sheath (2), a breakable zone (14) having weak mechanical characteristics being provided at the junction between the ring (10) and the sheath (2) to enable said ring to be separated manually.

3. A protective endpiece according to either preceding claim, **characterized in that** the detachable ring (10) presents an inside shoulder (19) arranged to co-operate with a corresponding shoulder (102) on the end of the tube (100) to retain the detachable ring (10) on the end of the tube (100) when an axial force is exerted on the sheath (2) to withdraw it.

4. A protective endpiece according to claim 3, **characterized in that** the detachable ring (10) presents an inside diameter which is slightly smaller than the inside diameter of the sheath (2), the retaining shoulder (19) of the detachable ring (10) being provided at the junction between said ring and the sheath (2).

5. A protective endpiece according to any preceding claim, **characterized in that** the detachable ring (10) comprises a body (11) adjacent to the sheath (2) and designed to be received between the end of the tube (100) and the equipment (200), and a shoulder (12) for pressing against the equipment (200).

6. A protective endpiece according to claim 5, **characterized in that** the body (11) of the detachable ring (10) presents an outside surface that is frustoconical.

## Patentansprüche

1. Schutzkappe für ein Rohrende (100), umfassend eine Hülse (2) mit einer Achse (3) und einer zentralen Aussparung (4) zum Aufnehmen des Rohrendes (100), und mit einem offenen Ende (5) und einem geschlossenen Ende (6), **dadurch gekennzeichnet, dass** die Hülse an ihrem offenen Ende (5) mit einem Ring (10) versehen ist, der sich von der Hülse lösen kann, um nach dem Zurückziehen der Hülse (2) und Verbinden des Rohrendes (100) mit einer Installation (200) an dem Rohrende (100) ein Verschlussstück für den Zwischenraum zu bilden, der zwischen dem Rohrende (100) und der Installation (200) vorhanden ist.

2. Rohrende nach Anspruch 1, **dadurch gekennzeichnet, dass** der lösbare Ring (10) aus einem gleichen Material einstückig mit der Hülse (2) hergestellt ist, wobei ein Trennbereich (14) mit schwachen mechanischen Eigenschaften im Verbindungsbereich zwischen Ring (10) und Hülse (2) vorgesehen ist, um ein manuelles Lösen des Rings zu ermöglichen.

3. Schutzkappe nach einem der vorhergehenden Ansprüche, **dadurch gekennzeichnet, dass** der lösbare Ring (10) eine innere Schulter (19) aufweist, die derart angeordnet ist, dass sie mit einer entsprechenden Schulter (102) des Rohrendes (100) zusammenwirkt, um den lösbaren Ring (10) an dem Rohrende (100) festzuhalten, wenn eine axiale Zugkraft auf die Hülse (2) wirkt.

4. Schutzkappe nach Anspruch 3, **dadurch gekennzeichnet, dass** der Innendurchmesser des lösbaren Rings (10) ein wenig kleiner ist als der Innendurchmesser der Hülse (2), wobei die Schulter (19) zum Halten des lösbaren Rings (10) an dem Verbindungsbereich zwischen dem Ring und der Hülse (2) angeordnet ist.

5. Schutzkappe nach einem der vorhergehenden Ansprüche, **dadurch gekennzeichnet, dass** der lösbare Ring (10) einen Körper (11) hat, der angrenzend an die Hülse (2) angeordnet und dazu vorgesehen ist, sich zwischen das Rohrende (100) und die Installation (200) zu schieben, sowie eine Schulter (12), die zur Anlage an der Installation (200) bestimmt ist.

6. Schutzkappe nach Anspruch 5, **dadurch gekennzeichnet, dass** der Körper (11) des lösbaren Rings (10) eine kegelstumpfförmige Außenfläche hat.
